(19) Europäisches Patentamt
European Patent Office
Office européen des brevets

(11) **EP 4 742 413 A1**

(12) **EUROPEAN PATENT APPLICATION**

(43) Date of publication:
**13.05.2026 Bulletin 2026/20**

(21) Application number: 25211847.6

(22) Date of filing: **28.10.2025**

(51) International Patent Classification (IPC):
*H01M 50/429* (2021.01)   *H01M 50/403* (2021.01)
*H01M 50/414* (2021.01)   *H01M 50/42* (2021.01)
*H01M 50/434* (2021.01)   *H01M 50/443* (2021.01)
*H01M 50/446* (2021.01)   *H01M 50/449* (2021.01)

(52) Cooperative Patent Classification (CPC):
H01M 50/403; H01M 50/414; H01M 50/42;
H01M 50/4295; H01M 50/434; H01M 50/443;
H01M 50/446; H01M 50/449

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **07.11.2024 KR 20240156847**

(71) Applicant: SK IE Technology Co., Ltd.
**Seoul 03161 (KR)**

(72) Inventors:
• YUN, Cheol Min
  34124 Daejeon (KR)
• KIM, Dong Jae
  34124 Daejeon (KR)
• OH, Eun Ji
  34124 Daejeon (KR)
• JUNG, Hee Joon
  34124 Daejeon (KR)

(74) Representative: Prüfer & Partner mbB
Patentanwälte · Rechtsanwälte
Sohnckestraße 12
81479 München (DE)

(54) **COMPOSITE SEPARATOR AND ELECTROCHEMICAL DEVICE INCLUDING THE SAME**

(57)   Provided is a composite separator including: a porous substrate; and a ceramic layer formed on one or both surfaces of the substrate. Specifically, the ceramic layer includes inorganic particles, a binder, and a particulate fusing agent and satisfies the following Equation 1, and the binder is carboxymethyl cellulose having a weight average molecular weight of 180,000 g/mol to 280,000 g/mol. The composite separator according to the present disclosure may secure excellent heat resistance, adhesive strength, and fusion strength with an electrode:

[Equation 1]

$$0.9 < \frac{T \times (W1 + W2)}{W2 \times D} < 2.4$$

wherein T, W1, W2, and D are as defined in the specification.

FIG. 1

EP 4 742 413 A1

**Description**

**TECHNICAL FIELD**

The following disclosure relates to a separator and an electrochemical device including the same, as well as to the use of the same in electric vehicles, battery charging stations and solar power and wind power generations, to the use of a combination of binders for a ceramic layer to be disposed on a porous substrate, and to the use of the separator in storing and transporting.

**BACKGROUND**

In recent years, as an electrochemical device gradually has a higher capacity and higher output, there is a growing demand for securing heat resistance and safety. In particular, performance required for a separator which plays an important role in securing heat resistance and safety of an electrochemical device is being advanced, and, for example, a composite separator in which an inorganic coating layer including inorganic particles such as alumina ($Al_2O_3$), silica ($SiO_2$), and zirconia ($ZrO_2$) as well as a binder is introduced onto a porous substrate has been established as an important technology.

However, since a conventional composite separator has insufficient adhesion to an electrode, the separator and the electrode are separated during a cell assembly process to cause distortion, deformation, and the other detachment of an electrode assembly and cause short circuit between electrodes, resulting in a safety issue. In order to solve the problem, a method of separately introducing an adhesive layer capable of exhibiting fusion strength with an electrode on an inorganic coating layer has been suggested. However, it is difficult to apply the method to actual commercialization, e.g., due to the necessity of addition of further process steps which results in increasing manufacturing costs, and the added adhesive layer increases internal resistance of a battery and may degrade electrical performance.

[Related Art Documents]

[Patent Document]

KR 10-2573567 B1 (August 29, 2023)

**SUMMARY**

An embodiment of the present invention is directed to providing a composite separator in which a particulate fusing agent is introduced to a ceramic layer, which may secure excellent heat resistance, adhesive strength, and fusion strength with electrodes even at a small thickness and may prevent a blocking phenomenon.

Another embodiment of the present invention is directed to providing an electrochemical device employing the composite separator.

In one general aspect, a composite separator includes: a porous substrate; and a ceramic layer formed on one or both surfaces of the substrate, wherein the ceramic layer includes inorganic particles, a binder, and a particulate fusing agent and satisfies the following Equation 1, and the binder is carboxymethyl cellulose having a weight average molecular weight of 180,000 g/mol to 280,000 g/mol:

[Equation 1]

$$0.9 < \frac{T \times (W1+W2)}{W2 \times D} < 2.4$$

wherein

T is a thickness ($\mu$m) of the ceramic layer;
W1 is a content (wt%) of the binder to the total weight of the ceramic layer;
W2 is a content (wt%) of the particulate fusing agent to the total weight of the ceramic layer; and
D is an average particle diameter ($\mu$m) of the particulate fusing agent. The average particle diameter D of the particulate fusing agent is defined as the D50 value. The term "particulate" defines that a certain matter, in the present invention e.g. the fusing agent, is present - at least in its initial (original) form - in the form of a particle.

The particulate fusing agent may have an average particle diameter (D50) of 1 $\mu$m to 10 $\mu$m. In a further embodiment, the average particle diameter (D50) of the particulate fusing agent may be 1.0 $\mu$m to 10 $\mu$m, or 1.5 $\mu$m to 10 $\mu$m, or 2.0 $\mu$m to 10 $\mu$m, or 2.5 $\mu$m to 10 $\mu$m, or 1.5 $\mu$m to 7.5 $\mu$m, or 1.5 $\mu$m to 6.5 $\mu$m, or 1.5 $\mu$m to 5.5 $\mu$m, or 2.0 $\mu$m to 5.5 $\mu$m, or 2.5 $\mu$m to 5.0 $\mu$m. In a further embodiment, the D50 of the particulate fusing agent is 2.0 $\mu$m to 7.5 $\mu$m. In a preferred embodiment, the D50 of the particulate fusion agent is 1.5 $\mu$m to 7.5 $\mu$m, more preferably 2.0 $\mu$m to 7,0 $\mu$m, and even more preferably 2.5 $\mu$m to 5.5 $\mu$m. The particulate fusing agent is selected from the group consisting of polyurethane beads, polyurethane acryl beads, epoxy-acryl beads, polystyrene-polybutyl methacrylate-polymethyl methacrylate (PS-PBMA-PMMA), polybutyl methacrylate-polymethyl methacrylate (PBMA-PMMA) polystyrene-polydimethylsiloxane-polybutyl methacrylate (PS-PDMS-PBMA), polystyrene-polydimethylsiloxane-polymethyl methacrylate (PS-PDMS-PMMA), and polydimethylsiloxane-polymethyl methacrylate (PDMS-PMMA)

A total thickness of the ceramic layer may be 1 $\mu$m to 20 $\mu$m.

The carboxymethyl cellulose may have a degree of substitution of 0.6 to 1.2.

The inorganic particles may have an average particle diameter ($D_{50}$) of 0.01 $\mu$m to 1 $\mu$m.

The inorganic particles may be one or two or more selected from boehmite, pseudo-boehmite, $BaSO_4$, $CeO_2$, MgO, CaO, ZnO, $Al_2O_3$, $SiO_2$, $TiO_2$, $BaTiO_3$, $HfO_2$, $SrTiO_3$, $SnO_2$, NiO, $ZrO_2$, $Y_2O_3$, and SiC.

The inorganic particles may be included at 90 to 99 wt% with respect to the total weight of the ceramic layer.

The binder may be included at 0.1 wt% to 10 wt% with respect to the total weight of the ceramic layer.

The particulate fusing agent may be included at 0.1 wt% to 10 wt% with respect to the total weight of the ceramic layer.

The binder and the particulate fusing agent may be included at a weight ratio of 5:5 to 8:2.

The particulate fusing agent may have a glass transition temperature (Tg) of 40°C to 80°C.

The porous substrate may be hydrophilically surface-treated. Specifically, the porous substrate may comprise at least one polar functional group introduced through hydrophilic surface treatment, the polar functional group being selected from any one or more of a carboxyl group, an aldehyde group, a hydroxyl group, a carbonyl group, an amino group. The hydrophilic surface treatment may preferably be a corona discharge treatment or a plasma discharge treatment, or a combination thereof.

The composite separator according to an exemplary embodiment may have heat shrinkage rates in MD and TD directions which are measured after the composite separator is allowed to stand at 150°C for 60 minutes, of both 4% or less. The heat shrinkage rate of the composite separator was measured based on the ASTM D1204 standard, but the following method was used. Lattice points were marked at 2 cm intervals on a square with one side of 10 cm on the composite separator specimen, and one side of the square was the transverse direction (TD) and the other one was the machine direction (MD). The specimen was placed right in the center, 5 sheets of paper were placed on and under the specimen, respectively, the four sides of the paper were taped, and the taped specimen was allowed to stand in a hot air drying oven at 150°C for 60 minutes. Thereafter, the specimen was taken out, and the separator was observed with a camera to calculate the shrinkage rate in the machine direction (MD) and the shrinkage rate in the transverse direction (MD) at an ambient temperature.

When the composite separator according to an exemplary embodiment is subjected to a cardboard test and a degree of foreign matter smeared on a surface of a cardboard is evaluated, a ratio of an area occupied by the smeared foreign matter to an area of the cardboard may be 5% or less:

[Cardboard test]

a black cardboard and a rubber pad having a size of 2 cm × 10 cm are sequentially placed on a ceramic layer of a composite separator specimen having a size of 5 cm × 10 cm, the cardboard is pulled out horizontally at a speed of 0.1 m/s for a distance of 60 mm while a force of 10 N is applied to the rubber pad using a pressing device, and a degree of foreign matter smeared on the surface of the cardboard is tested.

In another general aspect, an electrochemical device includes: a positive electrode, a negative electrode, and a composite separator, wherein the composite separator includes a porous substrate and a ceramic layer formed on one or both surfaces of the substrate, the ceramic layer includes inorganic particles, a binder, and a particulate fusing agent and satisfies the following Equation 1, and the binder is carboxymethyl cellulose having a weight average molecular weight of 180,000 g/mol to 280,000 g/mol:

[Equation 1]

$$0.9 < \frac{T \times (W1+W2)}{W2 \times D} < 2.4$$

wherein

T is a thickness ($\mu$m) of the ceramic layer;
W1 is a content (wt%) of the binder to the total weight of the ceramic layer;
W2 is a content (wt%) of the particulate fusing agent to the total weight of the ceramic layer; and
D is an average particle diameter ($\mu$m) of the particulate fusing agent. The average particle diameter D of the particulate fusing agent is D50.

In another general aspect, a method for manufacturing a composite separator of the present invention includes: applying a composition for forming a ceramic layer on one or both surfaces of a porous substrate, wherein the composition includes carboxymethyl cellulose having a weight average molecular weight of 180,000 g/mol to 28,000 g/mol and optionally a degree of substitution of 0.6 to 1.2, in combination with inorganic particles and a fusing agent; and drying the composition to form a ceramic layer. Prior to applying the composition for forming a ceramic layer on one or both surfaces of the porous substrate, the one or both surfaces of the porous substrate are subjected to a corona discharge treatment. By this corona discharge treatment, a surface polar group is introduced on the surface of the porous substrate.

In another general aspect, an electrochemical comprises a positive electrode, a negative electrode, and the composite separator. Specifically, the electrochemical device is a lithium battery.

In another general aspect, the present disclosure provides the use of the electrochemical device in electric vehicles, battery charging stations, and solar power generations and wind power generations.

In another general aspect, the present disclosure provides the use of the carboxymethyl cellulose in combination with inorganic particles and a fusing agent for the formation of a ceramic layer formed on one or both surfaces of a porous substrate, optionally to produce a separator, wherein the carboxymethyl cellulose has a weight average molecular weight of 180,000 g/mol to 280,000 g/mol and optionally a degree of substitution of 0.6 to 1.2.

In an exemplary embodiment, the use disclosed in the present disclosure may provide the composite separator stored and transported in a winding state by suppressing a desorption phenomenon and a blocking phenomenon.

In an exemplary embodiment, the use disclosed in the present disclosure may provide adhesive strength between inorganic particles and between inorganic particles and a substrate. Alternatively or in addition, the use disclosed in the present disclosure may provide fusion strength with an electrode. Alternatively or in addition, the use disclosed in the present disclosure may provide heat resistance. An adhesive strength may be achieved by the use such that when a coated substrate is subjected to a cardboard test disclosed herein and a degree of foreign matter smeared on a surface of a cardboard is evaluated, a ratio of an area occupied by the smeared foreign matter to an area of the cardboard is 5% or less. Optionally, a fusion strength with an electrode may be achieved by the use such that when sheets of an electrode were contacted with the coated substrate, all electrode sheets are fused. Optionally, heat resistance heat may be achieved by the use such that shrinkage rates of MS and TD, which are measured after the composite separator is allowed to stand at 150°C for 60 minutes, are both 4% or less.

Other features and aspects will be apparent from the following detailed description, the drawings, and the claims.

## BRIEF DESCRIPTION OF THE DRAWINGS

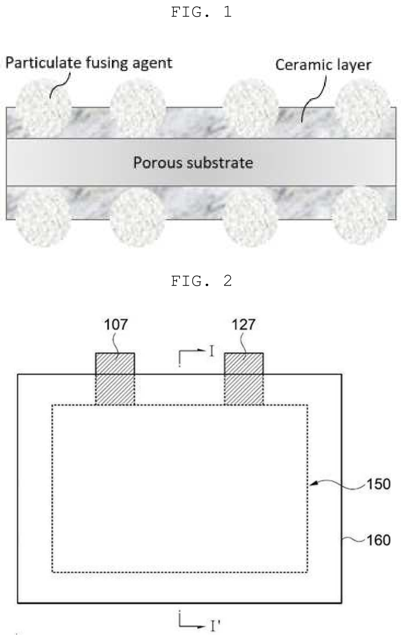

FIG. 1 shows a cross section of a composite separator according to an exemplary embodiment.
FIG. 2 is a schematic plan view of an electrochemical device based on an example embodiment.

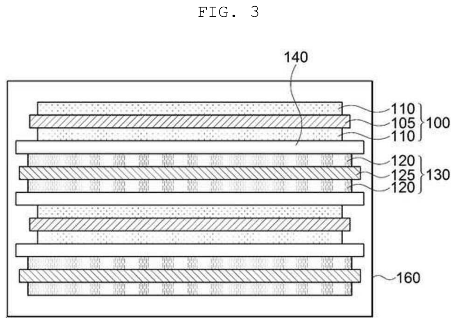

FIG. 3 is a schematic cross-sectional view of an electrochemical device based on an example embodiment.

[Detailed Description of Main Elements]

100: Positive electrode
105: Positive electrode current collector
107: Positive electrode lead
110: Positive electrode mixed layer
120: Negative electrode mixed layer
125: Negative electrode current collector
127: Negative electrode lead
130: Negative electrode
140: Separator

150:     Electrode assembly
160:     Case

## DETAILED DESCRIPTION OF EMBODIMENTS

In the present specification, unless otherwise defined, all technical terms and scientific terms have the same meanings as those commonly understood by a person skilled in the art to which the present invention pertains. The terms used herein are only for effectively describing a certain specific example and are not intended to limit the present invention.

The singular form used in the present specification may be intended to also include a plural form, unless otherwise indicated in the context.

Throughout the present specification, unless otherwise particularly stated, the word "comprise", "equipped", "contain", or "have" does not mean the exclusion of any other constituent element, but mean further inclusion of other constituent elements, and elements, materials, or processes which are not further listed are not excluded.

The numerical range used in the present specification includes all values within the range including the lower limit and the upper limit, increments logically derived from the form and spanning of a defined range, all double limited values, and all possible combinations of the upper limit and the lower limit in the numerical range defined in different forms. Unless otherwise defined in the present specification, values which may be outside a numerical range due to experimental error or rounding off of a value are also included in the defined numerical range.

Unless otherwise particularly defined in the present specification, "about" may be considered as a value within 30%, 25%, 20%, 15%, 10%, or 5% of a stated value.

In the present specification, an "average particle diameter" refers to "D50", and "D50" refers to a particle diameter of a sample particle to be measured which corresponds to 50% in terms of a volume-based accumulated fraction. The average particle diameter may be derived from particle size distribution results obtained by collecting a sample of particles to be measured via laser diffraction in accordance with the standard of ISO 13320-1 and performing analysis using S3500 available from MICROTRAC, in which the sample to be measured refers to inorganic particles and a particulate fusing agent.

In the present specification, carboxymethyl cellulose (CMC) refers to a cellulose derivative which is etherized by substituting a hydroxyl group (-OH) of cellulose with $-OCH_2COOH$ and/or $-OCH_2COO^-M^+$ in which $M^+$ is an alkali metal cation and may be selected from lithium (Li), sodium (Na), potassium (K), rubidium (Rb), cesium (Cs), and francium (Fr). In the present specification, a "degree of substitution (DS)" of carboxymethyl cellulose refers to the average number of the substituents per one anhydrous glucose unit in a cellulose molecule, which may be measured by a known or conventional method, for example, may be measured in accordance with ASTM D1439 and/or calculated by $^1$H-NMR or $^{13}$C-NMR analysis.

The degree of substitution (DS) of carboxymethyl cellulose (CMC) was measured according to a titration method based on ASTM D1439. The experiment was carried out using a magnetic stirrer, aspirator, dry oven, 300 mL beaker, pipette, 250 mL Erlenmeyer flask, and Petri dish. The reagents used included 80% ethanol, 100% ethanol, 0.1 N sodium hydroxide (NaOH), phenolphthalein indicator, and 0.1 N sulfuric acid ($H_2SO_4$). Specifically, 150 mL of 80% ethanol was added to a 300 mL beaker, followed by 10 mL of 1 N nitric acid ($HNO_3$). Approximately 1-2 g of CMC sample was introduced into the beaker and stirred for 1 hour to convert the sodium salt form of CMC into the acid form (CMC-acid). After allowing the mixture to stand for about 10-20 minutes, the supernatant was decanted. Then, 150 mL of 80% ethanol was added again and stirred for 30-40 minutes, followed by decanting the supernatant once more. The precipitated CMC-acid was filtered using an aspirator and washed with 500 mL of 80% ethanol, followed by one or two washes with 100% ethanol. The central portion of the CMC-acid was collected in a clean weighing dish and dried in a dry oven for 20-30 minutes. After drying, approximately $0.2 \pm 0.05$ g of the dried sample was weighed accurately, and 25 mL of 0.1 N NaOH solution was added. The sample solution was then transferred to a 250 mL Erlenmeyer flask containing 100 mL of distilled water and stirred for 40-60 minutes until completely dissolved. Two to three drops of phenolphthalein were added as an indicator, and the solution was titrated with 0.1 N $H_2SO_4$ while stirring until the color changed from red to colorless. The number of millimoles of CMC-acid per gram of dried sample (A) was determined according to the following equation:

$$A = \frac{\text{(millimoles of CMC Acid)}}{\text{Sample dry weight (g)}}$$

The degree of substitution (DS) was then calculated from A using the following equation:

$$B \text{ (D.S. value)} = \frac{162 \times A}{10,000 - 58 \times A}.$$

Hereinafter, the present disclosure will be described in detail. However, it is only illustrative, and the present disclosure is not limited to the specific exemplary embodiment which is illustratively described.

Conventional technology used a method of introducing a separate adhesive layer on an inorganic coating layer, for improving fusion strength between a composite separator including a porous substrate and an inorganic coating layer and an electrode. However, it was difficult to apply the method to actual commercialization due to addition of process steps and increasing manufacturing costs, and the added adhesive layer increased internal resistance of a battery and had a possibility of degrading electrical performance. Meanwhile, a method of introducing a fusing agent capable of implementing fusion strength with an electrode to the inorganic coating layer has been suggested, but recently, thinning of separators is in progress for high capacity and high output characteristics of an electrochemical device, a problem such as occurrence of a blocking phenomenon occurs due to desorption of a fusing agent when sufficient fusion strength is intended to be implemented even in a small thickness range, and thus, development of a new separator is being demanded.

An exemplary embodiment of the present invention provides a composite separator which may secure sufficient fusion strength with an electrode even in a small thickness range, simultaneously may have excellent anti-blocking performance, may have excellent adhesive strength between inorganic particles in a coating layer and between inorganic particles and a substrate, and may satisfy an effect of preventing a heat shrinkage phenomenon at a high temperature.

Specifically, the composite separator according to an exemplary embodiment includes: a porous substrate; and a ceramic layer formed on one or both surfaces of the substrate, wherein the ceramic layer includes inorganic particles, a binder, and a particulate fusing agent.

The ceramic layer also satisfies the following Equation 1, and the binder is carboxymethyl cellulose having a weight average molecular weight of 180,000 g/mol to 280,000 g/mol:

[Equation 1]

$$0.9 < \frac{T \times (W1+W2)}{W2 \times D} < 2.4$$

wherein

T is a thickness ($\mu$m) of the ceramic layer;
W1 is a content (wt%) of the binder to the total weight of the ceramic layer;
W2 is a content (wt%) of the particulate fusing agent to the total weight of the ceramic layer; and
D is an average particle diameter ($\mu$m) of the particulate fusing agent.

Since the composite separator according to an exemplary embodiment uses CMC having a specific molecular weight range as described above as the binder and satisfies the range of Equation 1 by having a specific relationship of the thickness of the ceramic layer, the contents of the binder and the particulate fusing agent, and the average particle diameter of the particulate fusing agent, it may have sufficient fusion strength with an electrode, simultaneously may have excellent heat resistance as compared with a conventional separator having a ceramic layer at the same thickness, and may have excellent adhesive strength between the inorganic particles and between the inorganic particles and the substrate to effectively suppress a desorption phenomenon of the inorganic particles and a shrinkage phenomenon at a high temperature. In addition, the composite separator according to an exemplary embodiment may effectively suppress a desorption phenomenon and a blocking phenomenon of inorganic particles and/or a particulate fusing agent during winding.

In an exemplary embodiment, the thickness (T) of the ceramic layer is not largely limited as long as the range of Equation 1 is satisfied by the combination of the content (W1) of the binder, the content (W2) of the particulate fusing agent, and the average particle diameter (D) of the particulate fusing agent, but may be, for example, 0.1 $\mu$m to 10 $\mu$m, 0.5 $\mu$m to 10 $\mu$m, 0.5 $\mu$m to 8 $\mu$m, 0.5 $\mu$m to 5 $\mu$m, 1 $\mu$m to 5 $\mu$m, 1.2 $\mu$m to 5 $\mu$m, or 1.5 $\mu$m to 3 $\mu$m, and may include all possible combinations of the upper limits and the lower limits of the numerical ranges.

In an exemplary embodiment, the total thickness of the ceramic layer on one or both surface of the substrate may be 0.1 $\mu$m to 20.0 $\mu$m, 0.1 $\mu$m to 10.0 $\mu$m, 0.5 $\mu$m to 10.0 $\mu$m, 1 $\mu$m to 10 $\mu$m, 2 $\mu$m to 8 $\mu$m, 2 $\mu$m to 5 $\mu$m, or 3 $\mu$m to 5 $\mu$m, and may include all possible combinations of the upper limits and the lower limits of the numerical ranges. For example, the total thickness of the ceramic layer may be more than 2 $\mu$m and less than 5 $\mu$m. The total thickness of the ceramic layer refers to the thickness of the ceramic layer formed on one surface of the porous substrate when the composite separator according to an exemplary embodiment includes the ceramic layer formed on one surface of the porous substrate, and refers to the sum of the thicknesses of the ceramic layers formed on both surfaces of the porous substrate when the composite separator according to an exemplary embodiment includes the ceramic layer formed on both surfaces of the porous substrate, and the thicknesses of the ceramic layer formed on both surfaces may be the same as or different from each other.

In an exemplary embodiment, since the carboxymethyl cellulose (CMC) satisfies a weight average molecular weight range of 180,000 g/mol to 280,000 g/mol, even when CMC is used alone as the binder of the ceramic layer, excellent adhesive strength between inorganic particles and between inorganic particles and a substrate and heat resistance may be simultaneously satisfied, and when forming the ceramic layer, a coating slurry has appropriate viscosity to facilitate formation of a coating layer. As an example, when the weight average molecular weight of CMC is less than 180,000 g/mol, sufficient adhesive strength may not be implemented, and when it is more than 280,000 g/mol, the coating layer (ceramic layer) may not be formed.

In an exemplary embodiment, the carboxymethyl cellulose may have the weight average molecular weight of 180,000 to 280,000 g/mol, 180,000 to 260,000 g/mol, 180,000 to 250,000 g/mol, 190,000 to 250,000 g/mol, or 20,000 to 250,000 g/mol, and may include all possible combinations of the upper limits and the lower limits of the numerical ranges. The weight average molecular weight of the carboxymethyl cellulose may refer to a weight average molecular weight converted with a molecular weight calibration curve using a polysaccharide standard sample measured by a GPC method. The GPC method may be carried out at an ambient temperature, and the sample is prepared by dissolving CMC at a concentration of approximately 0.1% w/v in a standard reference solvent. The prepared solution is then injected into the GPC instrument for analysis.

In addition, the carboxymethyl cellulose may have the degree of substitution of 0.6 or more, 0.7 or more, 0.8 or more, 0.9 or more, 1.5 or less, 1.2 or less, 1.1 or less, or 1.0 or less, specifically, 0.6 to 1.5, 0.6 to 1.2, 0.6 to 1.1, 0.7 to 1.1, 0.7 to 1.0, or 0.8 to 1.0, and may include all possible combinations of the upper limits and the lower limits of the numerical ranges.

Since carboxymethyl cellulose satisfying the combination of the weight average molecular weight and the degree of substitution range is used, an effect of improving heat resistance and adhesive strength simultaneously may be further improved, for example, applicability when applying a coating slurry on the surface of the porous substrate during formation of the ceramic layer is better, heat resistance is better even at a small thickness of the ceramic layer on the composite separator, and adhesive strength between the inorganic particles or between the ceramic layer and the porous substrate is improved.

In an exemplary embodiment, the particulate fusing agent may have an average particle size (D50) of 1 $\mu$m or more, 1.5 $\mu$m or more, 2.0 $\mu$m or more, 2.5 $\mu$m or more and 10 $\mu$m or less, 8 $\mu$m or less, 6 $\mu$m or less, or 5 $\mu$m or less, or 1 $\mu$m to 10 $\mu$m, 1 $\mu$m to 8 $\mu$m, 1 $\mu$m to 6 $\mu$m, or 2 $\mu$m to 6 $\mu$m, include all possible combinations of the upper limits and the lower limits of the numerical ranges, and make fusion strength with an electrode better.

In an exemplary embodiment, the particulate fusing agent may have a glass transition temperature ($T_g$) of 40°C or higher, 45°C or higher, 50°C or higher and 100°C or lower, 90°C or lower, or 80°C or lower, or 40°C to 100°C, 40°C to 90°C, or 40°C to 80°C, and may include all possible combinations of the upper limits and the lower limits of the numerical ranges. When the range is satisfied, fusion strength between the composite separator and the electrode may be exerted better, and battery performance may be better after assembling the battery. Preferably, the glass transition temperature may be 40°C to 70°C, the fusing agent may not flow in a drying step of the composite separator, is not deformed in a coating step and during a shipping process, and minimizes a change in air permeability of the substrate even after fusing to maintain excellent performance, which is thus more preferred.

The particulate fusing agent is not particularly limited as long as it may implement fusion strength with an electrode, but may be an acryl-based polymer, a urethane-based polymer, or a copolymer including them, preferably an acryl-based polymer.

The acryl-based polymer may be a homopolymer including an alkyl (meth)acrylate-based monomer polymerization unit or a copolymer including the alkyl (meth)acrylate-based monomer polymerization unit. The copolymer including the alkyl (meth)acrylate-based monomer polymerization unit may be a copolymer including an alkyl (meth)acrylate-based monomer polymerization unit; and one or two or more polymerization units selected from a styrene-based monomer polymerization unit, a butadiene-based monomer polymerization unit, and a vinyl-based monomer polymerization unit.

The alkyl (meth)acrylate-based monomer may be a C1-C10 alkyl (meth)acrylate-based monomer, C1-C6 alkyl (meth)acrylate-based monomer, or C1-C4 alkyl (meth)acrylate-based monomer, and specifically, one or two or more selected from methyl (meth)acrylate, ethyl (meth)acrylate, and n-butyl (meth)acrylate.

The particulate fusing agent is of particulate shape and made of a material or substance which assists in fusing other components, in particular among the inorganic particles in the ceramic layer and between the inorganic particles of the ceramic layer and the substrate, for instance upon the application of heat and/or pressure. A non-limiting example of the particulate fusing agent may be polyurethane beads, polyurethane acryl beads, epoxy-acryl beads, polystyrene-polybutyl methacrylate-polymethyl methacrylate (PS-PBMA-PMMA), polybutyl methacrylate-polymethyl methacrylate (PBMA-PMMA) polystyrene-polydimethylsiloxane-polybutyl methacrylate (PS-PDMS-PBMA), polystyrene-polydimethylsiloxane-polymethyl methacrylate (PS-PDMS-PMMA), or polydimethylsiloxane-polymethyl methacrylate (PDMS-PMMA), but is not limited thereto. In one embodiment, the particulate fusing agent is one or more, preferably one, selected from the list consisting of PS-PBMA-PMMA, PBMA-PMMA, PS-PDMS-PBMA, and PS-PDMS-PMMA. In a preferred embodiment, the particulate fusing agent is PS-PBMA-PMMA.

It is further preferred that the average particle diameter (D50) of the particulate fusing agent may be 1.5 $\mu$m to 10 $\mu$m, or 2.0 $\mu$m to 10 $\mu$m, or 2.5 $\mu$m to 10 $\mu$m, or 1.5 $\mu$m to 7.5 $\mu$m, or 1.5 $\mu$m to 6.5 $\mu$m, or 1.5 $\mu$m to 5.5 $\mu$m, or 2.0 $\mu$m to 5.5 $\mu$m, or 2.0 $\mu$m to 5.0 $\mu$m. In a further embodiment, the D50 of the particulate fusing agent is 2.0 $\mu$m to 7.5 $\mu$m.

In a preferred embodiment, the D50 of the particulate fusion agent is 1.5 $\mu$m to 7.5 $\mu$m, more preferably 2.0 $\mu$m to 7,0 $\mu$m, and even more preferably 2.0 $\mu$m to 5.5 $\mu$m.

In one embodiment, the particulate fusing agent is PS-PBMA-PMMA with a D50 of 1.5 $\mu$m to 7.5 $\mu$m, more preferably of 2.0 $\mu$m to 7,0 $\mu$m, and even more preferably of 2.0 $\mu$m to 5.5 $\mu$m. A method for manufacturing the particulate fusing agent is a known manufacturing method and may be performed by emulsion polymerization or suspension polymerization, and thus, detailed description thereof will be omitted.

In an exemplary embodiment, the type of inorganic particles may be used without limitation as long as it is commonly used in the art, and as a non-limiting example, may be one or two or more selected from metal oxides, metal hydroxide, metal carbides, metal nitrides, and metal carbonitrides, such as boehmite, pseudo-boehmite, $BaSO_4$, $CeO_2$, $MgO$, $CaO$, $ZnO$, $Al_2O_3$, $SiO_2$, $TiO_2$, $BaTiO_3$, $HfO_2$, $SrTiO_3$, $SnO_2$, $NiO$, $ZrO_2$, $Y_2O_3$, and $SiC$. In one embodiment, the inorganic particle is boehmite.

In an exemplary embodiment, the inorganic particles may have an average particle diameter (D50) of, for example, 0.01 $\mu$m or more, 0.02 $\mu$m or more, 0.05 $\mu$m or more, 0.1 $\mu$m or more and 0.01 $\mu$m to 10 $\mu$m, 0.02 $\mu$m to 5.0 $\mu$m, 0.1 $\mu$m to 3.0 $\mu$m, 0.1 $\mu$m to 2.0 $\mu$m, 0.1 $\mu$m to 1.0 $\mu$m, or 0.1 $\mu$m to 0.5 $\mu$m, or may include all possible combinations of the upper limits and the lower limits of the numerical ranges, but is not limited thereto. In an exemplary embodiment, the inorganic particle has a D50 of 0.1 mm to 0.5 $\mu$m. In an exemplary embodiment, the inorganic particle is boehmite, and has a D50 in a range between 0.1 $\mu$m and 0.5 $\mu$m. In an exemplary embodiment, the inorganic particle is boehmite and has a D50 of 0.3 $\mu$m. In an exemplary embodiment, the ceramic layer may include the inorganic particles at 90 to 99.9 wt%, 92 to 99.5 wt%, 92 to 99 wt%, 90 to 99 wt%, 95 to 99 wt%, or 95 to 98 wt%, with respect to the total weight of the ceramic layer.

In an exemplary embodiment, the content (W1) of the binder may be 0.01 wt% or more, 0.1 wt% or more, 0.5 wt% or more, 1 wt% or more, 1.5 wt% or more, 2 wt% or more, 10 wt% or less, 8 wt% or less, or 5 wt% or less, or 0.01 wt% to 10 wt%, 0.1 wt% to 10 wt%, 0.5 wt% to 5 wt%, or 1 to 5 wt%, with respect to the total weight of the ceramic layer, and may include all possible combinations of the upper limits and the lower limits of the numerical ranges.

In an exemplary embodiment, the content (W2) of the particulate fusing agent may be 0.1 wt% or more, 0.5 wt% or more, 1.0 wt% or more, more than 1.0 wt%, 1.1 wt% or more, or 1.2 wt% or more and 10 wt% or less, 5 wt% or less, 4 wt% or less, 3 wt% or less, 2 wt% or less, or less than 2 wt%, specifically 0.5 wt% to 5 wt%, 1 wt% to 5 wt%, 1 wt% to 3 wt%, 1 wt% to 2 wt%, or more than 1 wt% and less than 2 wt%, with respect to the total weight of the ceramic layer, and may include all possible combinations of the upper limits and the lower limits of the numerical ranges.

In an exemplary embodiment, the ceramic layer may include the binder at 10 parts by weight or less, 8 parts by weight or less, 5 parts by weight or less, 3 parts by weight or less, 2 parts by weight or less, or 1 part by weight or less and 0.01 parts by weight or more, 0.1 parts by weight or more, 0.5 parts by weight or more, 1 part by weight or more, 2 parts by weight or more, specifically 0.1 to 5 parts by weight, 1 to 5 parts by weight, or 1 to 3 parts by weight, with respect to 100 parts by weight of the inorganic particles, or at a content between the numerical ranges.

In an exemplary embodiment, the binder and the particulate fusing agent may be included at a weight ratio of 5:5 to 9:1, 5:5 to 8:2, or 5:5 to 7:3.

In an exemplary embodiment, heat shrinkage rates in MD and TD directions of the composite separator which is measured after the separator is allowed to stand at 150°C for 60 minutes may be both 5% or less, specifically 3% or less, 2.5% or less, 2.0% or less, 1.5% or less, 1.0% or less, or 0.5% or less, respectively measured at an ambient temperature.

In addition, in an exemplary embodiment, when a degree of foreign matter smeared on the surface of a cardboard is evaluated after a cardboard test of the composite separator, a ratio of an area occupied by the smeared foreign matter to an area of the cardboard may be 5% or less, specifically less than 5%, less than 4%, less than 3%, less than 2%, or less than 1.5%.

The cardboard test method involves placing a black cardboard and a rubber pad having a size of 2 cm $\times$ 10 cm sequentially on an upper surface of a ceramic layer of a composite separator specimen having a size of 5 cm $\times$ 10 cm, and pulling out the cardboard horizontally at a speed of 0.1 m/s for a distance of 60 mm in a state of applying a force of 10 N to the rubber pad using a pressing device to evaluate an area as a degree of foreign matter smeared on the surface of the cardboard, in which the foreign matter may be the constituent components of the ceramic layer, for example, the inorganic particles, the binder, the particulate fusing agent, or a combination thereof.

When the adhesive strength is evaluated using the cardboard test method as described above, measurement may be performed considering adhesive strength between the inorganic particles in the ceramic layer as well as adhesive strength between interfaces of the substrate and the ceramic layer, since the cardboard is horizontally pulled out during vertically applying the pressure and the adhesive strength between the inorganic particles by the binder may also be reflected by the cardboard test. A heat shrinkage degree may be predicted more accurately from the results of the adhesive strength test by the cardboard test, as compared with a conventional peel test. That is, when a ratio of an area occupied by the smeared foreign matter calculated by the cardboard test is less than 5%, less than 4%, less than 3%, less than 2%, or less than 1.5%, it means that adhesive strengths between the inorganic particles each other and between the inorganic particle coating layer, i.e. the ceramic layer and the substrate are all excellent, and the heat shrinkage phenomenon may be effectively suppressed.

As an example, a method such as a peeling test used for evaluating adhesive strength of an inorganic particle coating layer in a conventional composite separator is for evaluating adhesive strength between interfaces of the substrate and the inorganic particle coating layer, and in this case the adhesive strength between the inorganic particles is difficult to be predicted. Further, the heat shrinkage characteristics of the separator may not be accurately predicted with the evaluated value of the peeling test.

In an exemplary embodiment, the porous substrate is not limited as long as it is commonly used in the art, and for example, may be a woven fabric, a non-woven fabric, or a porous film. Specifically, the porous substrate may be polyolefins such as polyethylene and polypropylene, polyesters such as polyethylene terephthalate and polybutylene terephthalate, polyacetal, polyamide, polyimide, polycarbonate, polyetheretherketone, polyaryletherketone, polyetherimide, polyamideimide, polybenzimidazole, polyethersulfone, polyphenyleneoxide, cyclic olefin copolymer, polyphenylenesulfide, polyethylenenaphthalate, glass fiber, Teflon, and/or polytetrafluoroethylene, and any two or more of them may be used. Among the porous substrates, a porous film is manufactured by a dry method or a wet method and known in the art, and thus, will not be described any more.

In an exemplary embodiment, the porous substrate may have a porosity of 20 to 60%, 30 to 60%, 30 to 50%, or 35 to 45%, but is not limited thereto.

In an exemplary embodiment, the porous substrate may have a polar functional group introduced by performing a hydrophilic surface treatment, the polar functional group may be one of more selected from a carboxyl group, an aldehyde group, a hydroxyl group, and the other common polar functional group, and the hydrophilic surface treatment may be, as an example, a corona discharge treatment or a plasma discharge treatment, or a combination thereof, but is not limited thereto. Specifically, the corona surface treatment may be performed at a speed of 3 to 20 mpm (meter per minute) and the power density may be in a range of 0.5 to 5.0 W/m$^2$, more preferably in a range of 0.5 to 2.0 W/m$^2$ and even more preferably may be 2.0 W/m$^2$. This treatment may additionally improve the adhesive strength of between the ceramic layer and the porous substrate, and may be chosen according to surface property of the porous substrate.

In an exemplary embodiment, the thickness of the porous substrate is not particularly limited, and for example, may be 1 μm to 100 μm, 1 μm to 50 μm, 1 μm to 30 μm, 5 μm to 20 μm, or any value between the numerical values.

Another exemplary embodiment of the present invention provides a method for manufacturing the composite separator, and the method for manufacturing a composite separator includes: applying a composition for forming a ceramic layer including inorganic particles, a binder, and a particulate fusing agent on at least one surface of a porous substrate and drying the composition to form a ceramic layer, wherein the binder is carboxymethyl cellulose having a weight average molecular weight of 180,000 g/mol to 280,000 g/mol, and the ceramic layer satisfies the following Equation 1:

[Equation 1]

$$0.9 < \frac{T \times (W1 + W2)}{W2 \times D} < 2.4$$

wherein

T is a thickness (μm) of the ceramic layer;
W1 is a content (wt%) of the binder to the total weight of the ceramic layer;
W2 is a content (wt%) of the particulate fusing agent to the total weight of the ceramic layer; and
D is an average particle diameter (μm) of the particulate fusing agent. The average particle diameter D of the particulate fusing agent is D50.

Since the porous substrate, the binder, and the inorganic particles are as described above, detailed description will be omitted.

The composition for forming a ceramic layer may be prepared by dispersing the binder and the inorganic particles and/or by adding a dispersing agent, and the agglomerated inorganic particles may be deagglomerated/dispersed for instance by using a ball mill. The dispersing agent is not limited to a specific compound and may be used if it does not make an impact on the separator performance.

The composition for forming a ceramic layer further includes a solvent, and the solvent may be water, lower alcohols such as ethanol, methanol, propanol, and isopropanol; solvents such as dimethylformamide, acetone, tetrahydrofuran, diethyl ether, methylene chloride, N-methyl-2-pyrrolidone, hexane, and cyclohexane, or a mixture thereof, but is not necessarily limited thereto.

In an exemplary embodiment, though a solid content of the composition for forming a ceramic layer is not particularly limited, it may be, for example, 1 to 50 wt%, 5 to 30 wt%, or 10 to 30 wt%, but is not limited thereto. In addition, the composition for forming a ceramic layer may have a viscosity based on a solid content of 25 wt% of 800 to 5,000 mPa·s, 800 to 4,000 mPa·s, 800 to 3,000 mPa·s, or 1,000 to 3,000 mPa·s, at which it may be easier to form the ceramic layer, and an effect of improving heat resistance and adhesive strength of the separator may be better.

In an exemplary embodiment, though a method for applying or coating the composition for forming a ceramic layer on the porous substrate is not particularly limited, for example, roll coating, spin coating, dip coating, bar coating, die coating, slit coating, or inkjet printing may be used.

In an exemplary embodiment, the drying may be performed by drying by warm air, hot air, or low-humidity air, vacuum drying, or irradiation with far infrared rays, electron beams, or the other dryding methods. Since the drying temperature is not particularly limited, it may be appropriately adjusted depending on the experimental environment or the purpose, and for example, may be 30°C to 120°C, 30°C to 100°C, 50°C to 80°C, or 50°C to 70°C. The drying time is not particularly limited, but may be 30 seconds to 300 seconds, 60 seconds to 300 seconds, 100 seconds to 300 seconds, 150 seconds to 250 seconds, or about 180 seconds.

Another exemplary embodiment of the present invention provides an electrochemical device including the composite separator according to an exemplary embodiment, and the electrochemical device may be, as an example, a lithium secondary battery.

Specifically, the electrochemical device according to an exemplary embodiment includes: a positive electrode, a negative electrode, and a composite separator, wherein the composite separator includes a porous substrate and a ceramic layer formed on one or both surfaces of the substrate, the ceramic layer includes inorganic particles, a binder, and a particulate fusing agent and satisfies the following Equation 1, and the binder is carboxymethyl cellulose having a weight average molecular weight of 180,000 g/mol to 280,000 g/mol:

$$[\text{Equation 1}]$$

$$0.9 < \frac{T \times (W1 + W2)}{W2 \times D} < 2.4$$

wherein

T is a thickness ($\mu$m) of the ceramic layer;
W1 is a content (wt%) of the binder to the total weight of the ceramic layer;
W2 is a content (wt%) of the particulate fusing agent to the total weight of the ceramic layer; and
D is an average particle diameter ($\mu$m) of the particulate fusing agent.

Hereinafter, the electrochemical device according to an exemplary embodiment will be described using a lithium secondary battery as an example, but it may be manufactured with a structure known in the art using a common manufacturing method and common materials in the art, of course, except for including the composite separator according to an exemplary embodiment.

As an example, the lithium secondary battery may be manufactured according to a common manufacturing method of placing a negative electrode, the composite separator, and a positive electrode sequentially, assembling them, and injecting an electrolyte to complete the battery.

[Positive electrode]

The positive electrode may include a positive electrode current collector and a positive electrode mixed layer on at least one surface of the positive electrode current collector, the positive electrode may be manufactured by forming the positive electrode mixed layer by applying a positive electrode material slurry on one or both surfaces of the positive electrode current collector, drying, and rolling, and the positive electrode material slurry may include a positive electrode active material and a binder, and if necessary, may further include an electrically and/or ionically conductive material, a thickening agent, a surfactant, and the other additives typical in the field of electrode manufacturing.

The positive electrode current collector may include a stainless steel, nickel, aluminum, titanium, or an alloy thereof, and may include aluminum or a stainless steel which is surface-treated with carbon, nickel, titanium, or silver. The thickness of the positive electrode current collector may be, for example, 10 $\mu$m to 50 $\mu$m, but is not limited thereto.

The positive electrode active material is a compound capable of reversibly intercalating and deintercalating lithium ions and may be used without limitation as long as it is commonly used in the art, and as a non-limiting example, it may be a composite oxide of lithium with a metal selected from cobalt (Co), manganese (Mn), nickel (Ni), iron (Fe), niobium (Nb), magnesium (Mg), copper (Cu), zinc (Zn), molybdenum (Mo), tantalum (Ta), tungsten (W), aluminum (Al), or a combination thereof.

In an exemplary embodiment, the positive electrode active material may be a lithium-nickel composite oxide, and the lithium-nickel composite oxide may further include one or two or more selected from cobalt, manganese, and aluminum.

In an exemplary embodiment, the positive electrode active material may include a lithium nickel-cobalt-manganese (NCM)-based composite oxide, and though the composition of the metal is not particularly limited, a high capacity (high-Ni) composition having a high nickel content may be used, and the content of Ni in the NCM-based lithium oxide (for example, a mole fraction of nickel of the total moles of nickel, cobalt, and manganese) may be 0.3 or more, 0.4 or more, 0.5 or more, 0.6 or more, 0.7 or more, or 0.8 or more. In some exemplary embodiments, the content of Ni may be 0.8 to 0.95, 0.82 to 0.95, 0.83 to 0.95, 0.84 to 0.95, 0.85 to 0.95, or 0.88 to 0.95. The NCM-based composite oxide may be, for example, $LiNi_{0.33}Co_{0.33}Mn_{0.33}O_2$, $LiNi_{0.4}Co_{0.2}Mn_{0.4}O_2$, $LiNi_{0.5}Co_{0.2}Mn_{0.3}O_2$, $LiNi_{0.6}CO_{0.2}Mn_{0.2}O_2$, $LiNi_{0.7}CO_{0.15}Mn_{0.15}O_2$, $LiNi_{0.8}Co_{0.1}Mn_{0.1}O_2$ , and other NCM-based mixed composite oxides of formula $Li_aNi_xCo_yMn_zO_2$, in which x + y + z = 1, but is not limited thereto.

In an exemplary embodiment, the positive electrode active material may be, for example, lithium cobalt oxide-based, lithium manganese oxide-based, lithium nickel oxide-based, lithium iron phosphate-based (LFP, for example, $LiFePO_4$), lithium manganese phosphate-based (for example, $LiMnPO_4$), lithium cobalt phosphate-based (for example, $LiCoPO_4$), lithium iron pyrophosphate-based (for example, $Li_2FeP_2O_7$) materials, and the combination thereof.

The positive electrode binder is not particularly limited as long as it is commonly used in the art, may include a nonaqueous binder and/or an aqueous binder or include a rubber-based binder and/or a fluorine-based binder, and for example, may be one or two or more selected from acryl-based polymers such as polyacrylate, polymethacrylate, polybutylacrylate, and polyacrylonitrile, fluorine-based polymers such as polyvinylidene fluoride, polyhexafluoropropylene, polyvinylidene fluoride-hexafluoropropylene, and polyvinylidene fluoride-trichloroethylene, polyvinyl acetate, polyethylene oxide, cellulose, modified cellulose, polyamide, polyacrylamide, rubber, elastomer, and the other binder materials, but is not limited thereto.

The conductive material may be added for increasing conductivity of the positive electrode mixed layer and/or mobility of lithium ions or electrons. For example, the conductive material may be a linear conductive material and/or a dot-shaped conductive material, and for example, may include carbon-based conductive materials such as graphite, carbon black, acetylene black, ketjen black, graphene, carbon nanotubes, vapor-grown carbon fiber (VGCF), carbon fiber, and carbon nanofiber, and/or metal-based conductive materials including tin, tin oxide, titanium oxide, perovskite materials such as $LaSrCoO_3$ and $LaSrMnO_3$, and the other conductive materials, but is not limited thereto. As used herein, the term "dot-shaped conductive material" refers to a general spherical or particulate form of conductive material.

[Negative electrode]

The negative electrode may include a negative electrode current collector and a negative electrode mixed layer on at least one surface of the negative electrode current collector, the negative electrode may be manufactured by forming the negative electrode mixed layer by applying a negative electrode material slurry on one or both surfaces of the negative electrode current collector, drying, and rolling, and the negative electrode material slurry may include a negative electrode active material and a binder, and if necessary, may further include a conductive material, a thickening agent, and the other additives.

The negative electrode current collector may include a copper foil, a nickel foil, a stainless steel foil, a titanium foil, a nickel foam, a copper foam, a polymer substrate coated with a conductive metal, and the other current collector materials. The negative electrode current collector may have a thickness of, for example, 10 $\mu$m to 50 $\mu$m, but is not limited thereto.

The negative electrode active material is a material capable of adsorbing and desorbing lithium ions and may be used without limitation as long as it is commonly used in the art, and as a non-limiting example thereof, carbon-based materials such as crystalline carbon, amorphous carbon, a carbon composite, and carbon fiber; lithium metal; lithium alloy; silicon (Si)-containing materials, tin (Sn)-containing materials, and the combination thereof may be used.

An example of the amorphous carbon may include hard carbon, soft carbon, coke, mesocarbon microbeads (MCMB), mesophase pitch-based carbon fibers (MPCF), and the other carbon material, and an example of the crystalline carbon may include graphite-based carbon such as natural graphite, artificial graphite, graphitized coke, graphitized MCMB, and graphitized MPCF.

An element included in the lithium alloy may include aluminum, zinc, bismuth, cadmium, antimony, silicon, lead, tin, gallium, indium, or the other metals for intercalation.

The silicon-containing material may provide more increased capacity characteristics. The silicon-containing material may include Si, $SiO_x$ ($0<x\leq2$), metal-doped $SiO_x$ ($0<x\leq2$), a silicon-carbon composite, and the combination thereof, the metal may include lithium and/or magnesium, and the metal-doped $SiO_x$ ($0<x\leq2$) may include a metal silicate. The materials described above which may be used in manufacture of the positive electrode may be used as the binder, the conductive material, and the thickening agent of the negative electrode.

The negative electrode binder is not particularly limited as long as it is commonly used in the art, and may be rubber-based binders such as a styrene-butadiene rubber (SBR)-based binder, carboxymethyl cellulose (CMC), polyacrylic acid, poly(3,4-ethylenedioxythiophene) (PEDOT)-based binders, and other polymers such as polyvinylidene fluoride (PVDF) or poly(hydroxybutyrate-co-hydroxyvalerate) (PHBV).

[Electrolyte]

In an exemplary embodiment, the electrolyte may be a nonaqueous electrolytic solution, and the nonaqueous electrolytic solution may include a lithium salt as an electrolyte and an organic solvent.

The lithium salt is represented by, for example, $Li^+X^-$, and an anion of the lithium salt ($X^-$) may be exemplified by $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, and the combination thereof.

The organic solvent sufficiently dissolves the lithium salt and the additive, and may include an organic compound having no reactivity in a battery. The organic solvent may include, for example, at least one of carbonate-based solvents, ester-based solvents, ether-based solvents, ketone-based solvents, alcohol-based solvents, and aprotic solvents. The organic solvent may be, for example, one or two or more selected from propylene carbonate, ethylene carbonate, butylene carbonate, diethyl carbonate, dimethyl carbonate, ethyl methyl carbonate, methylpropyl carbonate, ethylpropyl carbonate, dipropyl carbonate, vinylene carbonate, methyl acetate, ethyl acetate, n-propyl acetate, 1,1-dimethylethyl acetate, methyl propionate, ethyl propionate, fluoroethyl acetate, difluoroethyl acetate, trifluoroethyl acetate, dibutylether, tetraethylene glycol dimethylether, diethylene glycol dimethylether, tetrahydrofuran, 2-methyltetrahydrofuran, ethyl alcohol, isopropyl alcohol, dimethylsulfuroxide, acetonitrile, diethoxyethane, sulfolane, $\gamma$-butyrolactone, propylene sulfite, and the other organic solvents.

[Cell structure]

For example, electrode tabs (positive electrode tab and negative electrode tab) may protrude from the positive electrode current collector and the negative electrode current collector and extend to one side of a case, respectively. The electrode tabs may be connected to electrode leads (positive electrode lead and negative electrode lead) which are fused with the one side of the case and extended or exposed to the outside of the case. For example, a pouch-type case, an angular case, a cylindrical case, a coin-type case, and other cases to extend the electrical connections may be used.

Hereinafter, the exemplary embodiments described above will be described in more detail through the following examples. However, the following examples are only for description and do not limit the scope of a right.

The physical properties of the examples were measured as follows:

**[Method for measuring physical properties]**

**1) Glass transition temperature (Tg)**

A heat capacity of a sample according to heating at a rate of 10°C/min in a range of -100°C to 250°C, using a differential scanning calorimetry (DSC) was measured, and a temperature of a middle point of an interval where the heat capacity of the sample rapidly changed was set as a glass transition temperature.

**2) Thickness**

A composite separator was laminated in 10 layers, the thickness was measured at ambient temperature and atmospheric pressure by Mitutoyo (ID-C112X) to derive an average thickness of the 10 layers of the composite separator, and the average thickness was divided by 10 again to determine the thickness of the composite separator. A value obtained by subtracting the thickness of a porous substrate from the thickness of the composite separator was set as a total thickness of the ceramic layer. The thickness of the porous substrate may be measured with the same method.

**3) Adhesive strength**

[Cardboard test]

A composite separator was cut into a size of 5 cm × 10 cm to prepare a specimen, and a black cardboard and a rubber pad having a size of 2 cm × 10 cm were placed sequentially on the ceramic layer of the composite separator specimen. The cardboard was pulled out horizontally at a speed of 0.1 m/s for a distance of 60 mm in a state of applying a force of 10 N to the rubber pad using a pressing device, adhesive strength was evaluated depending on a degree of foreign matter smeared on the surface of the cardboard, and the foreign matter may be constituent components of the ceramic layer, for example, inorganic particles, a binder, or a combination thereof.

[Evaluation of degree of smeared foreign matter]

After the cardboard test, the surface of the cardboard was photographed with an optical camera and imaged, and an area of the smeared foreign matter was measured. Specifically, an indirect lighting was installed with an LED lamp in the visible light range having a 60° slope, and the cardboard was photographed with a 640 M pixel optical camera at a height of 40 cm from the sample (cardboard). The photographed cardboard image was loaded with an Image J program, only an area through which the separator and the rubber pad were passed was selected and cut using a crop function, an image file format of the cut area was converted into a 8 bit image, and a Sharpen filter was applied to the image to adjust the brightness and the contrast of the image so that it is easy to distinguish between the cardboard and foreign matter, which was detached from the surface of the composite separator and appeared white or high brightness in color being clearly distinguishable on the black cardboard. A threshold was applied to the image to convert it into a binary image, an Analyze Particles function was executed to calculate a ratio of an area occupied by the (white or highly bright) foreign matter to the total area, and adhesive strength was evaluated based on the following criteria:

A: < 1.5%
B: 1.5% - 5%
C: > 5%

**[Example** 1]

2 parts by weight of 1,2-benzisothiazolin-3-one (DIO2) as a dispersing agent was mixed with 100 parts by weight of boehmite having an average particle diameter (D50) of 0.3 μm as inorganic particles in water to prepare a slurry having a solid content of 45 wt%.
Carboxymethyl cellulose (CMC) having a degree of substitution of 0.9 and a weight average molecular weight of 200,000 g/mol as a binder and polystyrene-polybutylmethacrylate-polymethylmethacrylate block copolymer (PS-PBMA-PMMA) (D50: 2.5 μm, Tg: 62°C) as a particulate fusing agent were added to the prepared slurry, so that the weight ratio of inorganic particles/ binder/ particulate fusing agent was 96/2.3/1.7, thereby preparing a composition for forming a ceramic layer.
Both surfaces of a polyethylene film substrate having a thickness of 9 μm (porosity: 35%-45%, SKIET) were subjected to a corona discharge treatment (power density: 2 W/m$^2$) to introduce a surface polar group, and the corona surface treatment at this time was performed at a speed of 5 mpm (meter per minute). The composition for forming a ceramic layer was applied on both surfaces of the corona surface-treated polyethylene film substrate identically, bar-coated, and dried at 50°C to manufacture a composite separator having ceramic layers at the same thickness formed on both surfaces.

**[Example** 2]

The process was performed in the same manner as in Example 1, except that the weight ratio of inorganic particles/ binder/ particulate fusing agent was 95/3.3/1.7.

**[Example** 3]

The process was performed in the same manner as in Example 1, except that the weight ratio of inorganic particles/ binder/ particulate fusing agent was 95/3.8/1.2, and the thickness of the ceramic layer was changed as shown in Table 1.

**[Example 4]**

The process was performed in the same manner as in Example 1, except that the weight ratio of inorganic particles/ binder/ particulate fusing agent was 96/2/2, and the thickness of the ceramic layer was changed as shown in Table 1.

**[Example 5]**

The process was performed in the same manner as in Example 1, except that the weight ratio of inorganic particles/ binder/ particulate fusing agent was 95/3/2, and the thickness of the ceramic layer was changed as shown in Table 1.

**[Example 6]**

The process was performed in the same manner as in Example 1, except that the weight ratio of inorganic particles/ binder/ particulate fusing agent was 95/3.4/1.6, and the thickness of the ceramic layer was changed as shown in Table 1.

**[Example 7]**

The process was performed in the same manner as in Example 1, except that PS-PBMA-PMMA (D50: 5.0 μm, Tg: 62°C) was used as the particulate fusing agent, the weight ratio of inorganic particles/ binder/ particulate fusing agent was 95/3.3/1.7, and the thickness of the ceramic layer was changed as shown in Table 1.

**[Example 8]**

The process was performed in the same manner as in Example 7, except that the weight ratio of inorganic particles/ binder/ particulate fusing agent was 96/2.8/1.2.

**[Example 9]**

The process was performed in the same manner as in Example 7, except that the weight ratio of inorganic particles/ binder/ particulate fusing agent was 95/3.8/1.2, and the thickness of the ceramic layer was changed as shown in Table 1.

**[Comparative Example 1]**

The process was performed in the same manner as in Example 1, except that the weight ratio of inorganic particles/ binder/ particulate fusing agent was 97/1.3/1.7.

**[Comparative Example 2]**

The process was performed in the same manner as in Example 1, except that the weight ratio of inorganic particles/ binder/ particulate fusing agent was 94/4.8/1.2, and the thickness of the ceramic layer was changed as shown in Table 1.

**[Comparative Example 3]**

The process was performed in the same manner as in Example 1, except that the weight ratio of inorganic particles/ binder/ particulate fusing agent was 97/1/2, and the thickness of the ceramic layer was changed as shown in Table 1.

**[Comparative Example 4]**

The process was performed in the same manner as in Example 1, except that the weight ratio of inorganic particles/ binder/ particulate fusing agent was 94/4.65/1.35, and the thickness of the ceramic layer was changed as shown in Table 1.

**[Comparative Example 5]**

The process was performed in the same manner as in Example 1, except that polyacrylamide (PAAm) (Mw 200,000 g/mol, Sigma Aldrich) was used as the binder instead of CMC.

**[Comparative Example 6]**

The process was performed in the same manner as in Example 7, except that polyacrylamide (PAAm) (Mw 200,000 g/mol, Sigma Aldrich) was used as the binder instead of CMC.

**[Comparative Example 7]**

The process was performed in the same manner as in Example 1, except that PS-PBMA-PMMA (D50: 0.9 $\mu$m, Tg: 62°C) was used as the particulate fusing agent.
The physical properties of the composite separators obtained in the examples and the comparative examples were measured by the methods described in the [Method for measuring physical properties] above, and the values obtained by calculating the value of the following Equation 1 and truncating the third decimal place are shown in the following Table 1.
The composite separators obtained in the examples and the comparative examples all had ceramic layers having the same thickness on both surfaces of the substrate, and the value of half of the measured total thickness of the ceramic layer measured by the method for measuring physical properties was set as the thickness (T) of the ceramic layer formed on one surface:

[Equation 1]

$$\frac{T \times (W1+W2)}{W2 \times D}$$

wherein T is the thickness ($\mu$m) of the ceramic layer; W1 is the content (wt%) of the binder to the total weight of the ceramic layer; W2 is the content (wt%) of the particulate fusing agent to the total weight of the ceramic layer; and D is the average particle diameter ($\mu$m) of the particulate fusing agent.

[Table 1]

| | Total thickness ($\mu$m) of ceramic layer | T ($\mu$m) | D ($\mu$m) | Equation 1 | Adhesive strength | Heat shrinkage rate (%) | |
| --- | --- | --- | --- | --- | --- | --- | --- |
| | | | | | | MD | TD |
| Example 1 | 2 | 1 | 2.5 | 0.94 | B | 2 | 1 |
| Example 2 | 2 | 1 | 2.5 | 1.17 | B | 1.9 | 1.2 |
| Example 3 | 2.4 | 1.2 | 2.5 | 2.0 | B | 2 | 0.9 |
| Example 4 | 3 | 1.5 | 2.5 | 1.2 | A | 0.1 | 0.1 |
| Example 5 | 3 | 1.5 | 2.5 | 1.5 | A | 0.2 | 0.1 |
| Example 6 | 3.4 | 1.7 | 2.5 | 2.12 | A | 0.2 | 0.1 |
| Example 7 | 4 | 2 | 5.0 | 1.17 | A | 0.1 | 0.1 |
| Example 8 | 4 | 2 | 5.0 | 1.33 | A | 0.1 | 0.1 |
| Example 9 | 4.4 | 2.2 | 5.0 | 1.83 | A | 0.1 | 0.1 |
| Comparative Example 1 | 2 | 1 | 2.5 | 0.70 | C | 20 | 19 |
| Comparative Example 2 | 2.4 | 1.2 | 2.5 | 2.4 | A | 14 | 18 |

(continued)

| | Total thickness (μm) of ceramic layer | T (μm) | D (μm) | Equation 1 | Adhesive strength | Heat shrinkage rate (%) | |
|---|---|---|---|---|---|---|---|
| | | | | | | MD | TD |
| Comparative Example 3 | 3 | 1.5 | 2.5 | 0.9 | C | 15 | 14 |
| Comparative Example 4 | 3 | 1.5 | 2.5 | 2.66 | A | 10 | 9 |
| Comparative Example 5 | 2 | 1 | 2.5 | 0.94 | C | 13 | 12 |
| Comparative Example 6 | 4 | 2 | 5.0 | 1.17 | C | 15 | 13 |
| Comparative Example 7 | 2 | 1 | 0.9 | 2.61 | B | 1.8 | 1.2 |

## <Evaluation Example>

### Evaluation 1. Anti-blocking performance

Two sheets of the composite separators obtained in the above examples and comparative examples were placed so that the ceramic layers faced each other, respectively, pressing was performed at a temperature of 25°C and a pressure of 15 kgf/cm$^2$ for 1 hours, the separators were peeled off at 180° in accordance with ASTM D903, and then it was confirmed whether the particulate fusing agent and/or the inorganic particles were desorbed through scanning electron microscope (SEM). 10 random positions were designated, the number of desorbed particulate fusing agents and/or inorganic particles per unit area was counted, the average value of 10 points was derived, and the results of evaluating antiblocking performance by the following criteria are shown in the following Table 2.
∘: the fusing agent or the inorganic particles were not all desorbed, or less than 10$^{-4}$/μm$^2$ of them were desorbed.
×: 10$^{-4}$/μm$^2$ or more of the fusing agent or the inorganic particles were desorbed.

### Evaluation 2. Electrode fusion strength

A positive electrode and a negative electrode were manufactured as follows, and fusion strength between the electrode and the composite separators obtained in the above examples was evaluated.
94 wt% of LiCoO$_2$ as a positive active material, 2.5 wt% of polyvinylidene fluoride as an adhesive, and 3.5 wt% of carbon black as a conductive agent were added to N-methyl-2-pyrrolidone (NMP) as a solvent, and stirring was performed to prepare a uniform positive electrode slurry. An aluminum foil having a thickness of 30 μm was coated with the slurry, dried at a temperature of 120°C, and pressed to manufacture a positive electrode plate having a thickness of 150 μm.
95 wt% of artificial graphite as the negative active material, 3 wt% of acrylic latex having Tg of -52°C (product name: BM900B, solid content: 20 wt%), and 2 wt% of carboxymethyl cellulose (CMC) as a thickener were added to water as the solvent, and stirred, thereby preparing uniform negative electrode slurry. A copper foil having a thickness of 20 μm was coated with the slurry, dried at a temperature of 120°C, and pressed to manufacture a negative electrode plate having a thickness of 150 μm.
A composite separator was laminated between 4 sheets of the positive electrode (negative electrode) manufactured above, and pressing was performed at 90°C and 1 MPa for 30 seconds using a heat press machine to prepare each fusion strength evaluation sample for the positive electrode and the negative electrode, respectively. When the sample was lifted vertically, the number of attached electrodes was counted, and the fusion strength between the composite separator and each of the positive electrode and the negative electrode was evaluated and is shown in the following Table 2.
1/ 4: 1 out of 4 sheets of electrode were fused.
2/4: 2 out of 4 sheets of electrode were fused.
3/4: 3 out of 4 sheets of electrode were fused.
4/4: 4 out of 4 sheets of electrode were all fused.

[Table 2]

| | Antiblocking | Electrode fusion strength | |
|---|---|---|---|
| | | Positive electrode | Negative electrode |
| Example 1 | ○ | 4/4 | 4/4 |

(continued)

| | Antiblocking | Electrode fusion strength | |
| --- | --- | --- | --- |
| | | Positive electrode | Negative electrode |
| Example 2 | ○ | 4/4 | 4/4 |
| Example 3 | ○ | 4/4 | 4/4 |
| Example 4 | ○ | 4/4 | 4/4 |
| Example 5 | ○ | 4/4 | 4/4 |
| Example 6 | ○ | 4/4 | 4/4 |
| Example 7 | ○ | 4/4 | 4/4 |
| Example 8 | ○ | 4/4 | 4/4 |
| Example 9 | ○ | 4/4 | 4/4 |
| Comparative Example 1 | × | 4/4 | 4/4 |
| Comparative Example 2 | ○ | 4/4 | 4/4 |
| Comparative Example 3 | × | 4/4 | 4/4 |
| Comparative Example 4 | ○ | 4/4 | 4/4 |
| Comparative Example 5 | × | 4/4 | 4/4 |
| Comparative Example 6 | × | 4/4 | 4/4 |
| Comparative Example 7 | ○ | 0/0 | 0/0 |

Referring to Tables 1 and 2, it was found that the composite separator according to an exemplary embodiment of the present invention had excellent adhesive strength between the inorganic particles in the ceramic layer as well as excellent adhesive strength between interfaces of the substrate and the ceramic layer, and may effectively suppress a heat shrinkage phenomenon. In addition, it was confirmed that the composite separator according to an exemplary embodiment had excellent fusion strength with both the positive electrode and the negative electrode, and was able to suppress a desorption phenomenon and a blocking phenomenon of inorganic particles and/or a particulate fusing agent when winding the separator. In addition, the composite separator according to an exemplary embodiment has excellent productivity and is favorable for application to actual commercialization, and an electrochemical device employing the composite separator according to an exemplary embodiment may satisfy safety, a high capacity, and high output characteristics simultaneously.

From Table 1 it is confirmed that the adhesive strength by the cardboard may predict the results of the heat shrinkage especially in the examples 1 to 9.

However, the composite separators of Comparative Examples 1 to 4 which included the same components as an exemplary embodiment of the present invention, but did not satisfy the range of Equation 1 (0.9<Equation 1<2.4) had reduced adhesion and/or heat resistance and greatly increased heat shrinkage rates, and it was found that Comparative Example 7 having smaller D, i.e. 0.9 μm had significantly reduced fusion strength with the electrode and hardly had the fusion strength, since it does not satisfy Equation 1.

In addition, it was confirmed that Comparative Examples 5 and 6 employing PAAm as the binder had greatly reduced adhesive strength and heat resistance as compared with the composite separator according to an exemplary embodiment, and had deteriorated air permeability to have an increased air permeability value (sec/100 cc).

The composite separator according to an exemplary embodiment which includes a porous substrate; and a ceramic layer including inorganic particles, a binder, and a particulate fusing agent on the substrate may implement sufficient fusion strength with an electrode without having a separate adhesive layer on the ceramic layer, decrease internal resistance, and improve electrical performance.

In addition, though the composite separator according to an exemplary embodiment is formed at a very small thickness, it may have excellent heat resistance as compared with a conventional separator having a ceramic layer at the same thickness and have excellent adhesive strength between inorganic particles and between inorganic particles and the substrate to effectively suppress a desorption phenomenon of inorganic particles and a shrinkage phenomenon at a high temperature.

In addition, the composite separator according to an exemplary embodiment may suppress a desorption phenomenon and a blocking phenomenon of inorganic particles and/or a particulate fusing agent during winding.

In addition, the composite separator according to an exemplary embodiment has excellent productivity and is favorable for application to actual commercialization, and an electrochemical device employing the composite separator according to an exemplary embodiment may satisfy safety, a high capacity, and high output characteristics simultaneously.

The composite separator of the present disclosure may be widely applied to a green technology field such as electric vehicles, battery charging stations, and other solar power generations and wind power generations using batteries. In addition, the separator of the present disclosure may be used in eco-friendly electric vehicles, hybrid vehicles, and other renewable energy-powered devices for preventing climate change by suppressing air pollution and greenhouse gas emissions.

Hereinabove, although the present disclosure has been described by the specific matters and limited exemplary embodiments in the present disclosure, they have been provided only for assisting the entire understanding of the present disclosure, and the present disclosure is not limited to the exemplary embodiments, and various modifications and changes may be made by those skilled in the art to which the present disclosure pertains from the description.

Therefore, the present disclosure is not limited to the above-described exemplary embodiments, and the following claims as well as all modifications equal or equivalent to the claims are intended to fall within the scope of the disclosure.

## Claims

1. A composite separator comprising: a porous substrate; and a ceramic layer formed on one or both surfaces of the substrate,

    wherein the ceramic layer includes inorganic particles, a binder, and a particulate fusing agent and satisfies the following Equation 1, and
    the binder is carboxymethyl cellulose having a weight average molecular weight of 180,000 g/mol to 280,000 g/mol:

    [Equation 1]

    $$0.9 < \frac{T \times (W1+W2)}{W2 \times D} < 2.4$$

    wherein
    T is a thickness ($\mu$m) of the ceramic layer;
    W1 is a content (wt%) of the binder to the total weight of the ceramic layer;
    W2 is a content (wt%) of the particulate fusing agent to the total weight of the ceramic layer; and
    D is an average particle diameter ($\mu$m) of the particulate fusing agent.

2. The composite separator of claim 1, wherein the particulate fusing agent has an average particle diameter (D50) of 1 $\mu$m to 10 $\mu$m, preferably 1.5 $\mu$m to 10 um; and/or
    wherein the particulate fusing agent is selected from the group consisting of polyurethane beads, polyurethane acryl beads, epoxy-acryl beads, polystyrene-polybutyl methacrylate-polymethyl methacrylate (PS-PBMA-PMMA), polybutyl methacrylate-polymethyl methacrylate (PBMA-PMMA) polystyrene-polydimethylsiloxane-polybutyl methacrylate (PS-PDMS-PBMA), polystyrene-polydimethylsiloxane-polymethyl methacrylate (PS-PDMS-PMMA), and polydimethylsiloxane-polymethyl methacrylate (PDMS-PMMA).

3. The composite separator of claim 1 or 2, wherein a total thickness of the ceramic layer is 1 $\mu$m to 20 $\mu$m.

4. The composite separator of any one of the preceding claims, wherein the carboxymethyl cellulose has a degree of substitution of 0.6 to 1.2.

5. The composite separator of any one of the preceding claims, wherein the inorganic particles have an average particle diameter (D50) of 0.01 $\mu$m to 1 um,
    and/or, wherein the inorganic particles are one or two or more selected from boehmite, pseudo-boehmite, $BaSO_4$, $CeO_2$, $MgO$, $CaO$, $ZnO$, $Al_2O_3$, $SiO_2$, $TiO_2$, $BaTiO_3$, $HfO_2$, $SrTiO_3$, $SnO_2$, $NiO$, $ZrO_2$, $Y_2O_3$, and $SiC$.

6. The composite separator of any one of the preceding claims, wherein the inorganic particles are included at 90 to 99 wt% with respect to the total weight of the ceramic layer, and/or wherein the binder is included at 0.1 wt% to 10 wt% with respect to the total weight of the ceramic layer, and/or wherein the particulate fusing agent is included at 0.1 wt% to 10 wt% with respect to the total weight of the ceramic layer.

7. The composite separator of any one of the preceding claims, wherein the binder and the particulate fusing agent are included at a weight ratio of 5:5 to 8:2.

8. The composite separator of any one of the preceding claims, wherein the particulate fusing agent has a glass transition temperature (Tg) of 40°C to 80°C.

9. The composite separator of any one of the preceding claims, wherein the porous substrate comprises at least one polar functional group introduced through hydrophilic surface treatment, optionally wherein the at least one polar functional group is selected from any one or more of a carboxyl group, an aldehyde group, a hydroxyl group, a carbonyl group, an amino group, preferably wherein the hydrophilic surface treatment is a corona discharge treatment or a plasma discharge treatment, or a combination thereof.

10. The composite separator of any one of the preceding claims, wherein the composite separator has one or both characteristics (i) and/or (ii) :

   (i) heat shrinkage rates in the machine direction (MD) and the transverse direction (TD) which are measured after the composite separator is allowed to stand at 150°C for 60 minutes, of both 4% or less,
   (ii) when the composite separator is subjected to a cardboard test and a degree of foreign matter smeared on a surface of a cardboard is evaluated, a ratio of an area occupied by the smeared foreign matter to an area of the cardboard is 5% or less:

   [Cardboard test]
   a black cardboard and a rubber pad having a size of 2 cm × 10 cm are sequentially placed on a ceramic layer of a composite separator specimen having a size of 5 cm × 10 cm, the cardboard is pulled out horizontally at a speed of 0.1 m/s while a force of 10 N is applied to the rubber pad using a pressing device, and a degree of foreign matter smeared on the surface of the cardboard is tested.

11. An electrochemical device comprising a positive electrode, a negative electrode, and a composite separator, wherein the composite separator is as defined in any one of claims 1 to 10.

12. The electrochemical device according to claim 11, wherein the electrochemical device is a lithium battery.

13. Use of the electrochemical device according to claim 11 or 12 in electric vehicles, battery charging stations, solar power generations and wind power generations.

14. Use of carboxymethyl cellulose in combination with inorganic particles and a fusing agent for the formation of a ceramic layer formed on one or both surfaces of a porous substrate, optionally to produce a separator, wherein the carboxymethyl cellulose has a weight average molecular weight of 180,000 g/mol to 280,000 g/mol and optionally a degree of substitution of 0.6 to 1.2.

15. Use of the composite separator according to any one of claims 1 to 10 for storing and transporting in a winding state by suppressing a desorption phenomenon and a blocking phenomenon.

FIG. 1

Particulate fusing agent          Ceramic layer

Porous substrate

FIG. 2

107          127

150

160

FIG. 3

Europäisches
Patentamt
European
Patent Office
Office européen
des brevets

## EUROPEAN SEARCH REPORT

**Application Number**

EP 25 21 1847

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 439 843 A1 (LG ENERGY SOLUTION LTD [KR]) 2 October 2024 (2024-10-02) * examples 1,2 * | 1-15 | INV. H01M50/429 H01M50/403 H01M50/414 |
| Y | EP 4 156 340 A1 (ASAHI CHEMICAL IND [JP]) 29 March 2023 (2023-03-29) * paragraph [0203]; examples 1-28 * | 1-15 | H01M50/42 H01M50/434 H01M50/443 H01M50/446 |
| Y | US 2011/020709 A1 (FUKUMINE MAYUMI [JP] ET AL) 27 January 2011 (2011-01-27) * paragraphs [0013], [0042]; claim all; example all * | 1-15 | H01M50/449 |

**TECHNICAL FIELDS SEARCHED (IPC)**

H01M

The present search report has been drawn up for all claims

| Place of search | Date of completion of the search | Examiner |
|---|---|---|
| Munich | 17 February 2026 | Götz, Heide |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.....................................................................................................
& : member of the same patent family, corresponding
    document

EPO FORM 1503 03.82 (P4C01)

**EP 4 742 413 A1**

## ANNEX TO THE EUROPEAN SEARCH REPORT
## ON EUROPEAN PATENT APPLICATION NO.

EP 25 21 1847

17-02-2026

| Patent document cited in search report | | Publication date | Patent family member(s) | | Publication date |
|---|---|---|---|---|---|
| EP 4439843 | A1 | 02-10-2024 | CN | 118318344 A | 09-07-2024 |
| | | | EP | 4439843 A1 | 02-10-2024 |
| | | | JP | 2024540498 A | 31-10-2024 |
| | | | KR | 20230122467 A | 22-08-2023 |
| | | | US | 2025105444 A1 | 27-03-2025 |
| | | | WO | 2023153657 A1 | 17-08-2023 |
| EP 4156340 | A1 | 29-03-2023 | CN | 115668629 A | 31-01-2023 |
| | | | EP | 4156340 A1 | 29-03-2023 |
| | | | JP | 7305895 B2 | 10-07-2023 |
| | | | JP | WO2022186257 A1 | 09-09-2022 |
| | | | KR | 20220167311 A | 20-12-2022 |
| | | | TW | 202245325 A | 16-11-2022 |
| | | | US | 2024234959 A1 | 11-07-2024 |
| | | | WO | 2022186257 A1 | 09-09-2022 |
| US 2011020709 | A1 | 27-01-2011 | CN | 101932639 A | 29-12-2010 |
| | | | CN | 103151481 A | 12-06-2013 |
| | | | JP | 5434598 B2 | 05-03-2014 |
| | | | JP | 5704223 B2 | 22-04-2015 |
| | | | JP | 2014063754 A | 10-04-2014 |
| | | | JP | WO2009096528 A1 | 26-05-2011 |
| | | | KR | 20100114055 A | 22-10-2010 |
| | | | US | 2011020709 A1 | 27-01-2011 |
| | | | WO | 2009096528 A1 | 06-08-2009 |

EPO FORM P0459